# EUROPEAN PATENT APPLICATION

(11) **EP 4 372 041 A1**
(43) Date of publication of application: **22.05.2024**
(21) Application number: 23209806.1
(22) Date of filing: 14.11.2023
(51) Int. Cl.: C08K 5/3492

(54) **CYCLIC POLYMER AND ITS USE AS A LIGHT STABILIZER**

(30) Priority: 15.11.2022 IT 202200023511
(71) Applicant: Semki Chemicals S.r.l., 24060 Sovere (BG) (IT)
(72) Inventor: Todesco, Roberto Vittorio Pietro, Sovere (BG) (IT)
(74) Representative: Villa, Livia

(57) **Abstract**

The use of a cyclic polymer, in particular the use of UV196, as a light stabilizer in polymeric materials, as well as a film of polymeric material comprising UV196 as a light stabilizer, is described. In fact, it has been observed that UV196 allows even very thin films, i.e. less than 0.5 mm thick, to be stabilized in light, while at the same time offering advantages from the point of view of overall production sustainability.

## Description

### FIELD OF THE INVENTION

The invention concerns the use of a cyclic polymer, in particular the use of UV196, as a light stabilizer in polymeric materials. The invention also concerns a film of polymeric material comprising UV196 as a light stabilizer.

In fact, it has been observed that UV196 allows even very thin films, i.e. less than 0.5 mm thick, to be light stabilized, while at the same time offering advantages from the point of view of overall production sustainability.

### BACKGROUND ART

Polymeric stabilizers are chemical additives that can be added to polymeric materials, such as plastics and rubber, to inhibit or delay their degradation. Common polymer degradation processes include oxidation, UV damage, thermal degradation, ozonolysis, their combinations such as photooxidation, as well as reactions with catalyst residues, dyes or impurities. All these processes chemically degrade polymeric materials, as they induce phenomena of depolymerization, uncontrolled recombination and/or crosslinking, which negatively affect many key properties such as strength, malleability, appearance and color.

Stabilizers are used in all stages of the polymer life cycle. They allow plastic items to be produced faster and with fewer defects, prolong their useful life and facilitate their recycling.

As is known, there are many different types of plastic and each one can be vulnerable to different types of degradation, therefore the combined use of different stabilizers is used. Even for objects made with the same type of plastic, different applications may require different types of stabilization.

To this end, the most common stabilizers include antioxidants, heat stabilizers, flame retardants, and light stabilizers.

Antioxidants inhibit autoxidation that occurs when polymers react with atmospheric oxygen. Sensitivity to oxidation varies considerably depending on the polymer in question; for example, without stabilizers, polypropylene and unsaturated polymers, such as rubber, will slowly degrade at room temperature while polystyrene can be stable even at high temperatures.

Flame retardants are a wide range of compounds that improve the fire resistance of polymers. Examples of flame retardants include brominated compounds as well as aluminum hydroxide, antimony trioxide, and various organophosphates.

Light stabilizers can be divided into the following categories based on their mechanism of action:
- light shielding agent: this is a type of material that can shield or reflect ultraviolet rays, so that they cannot penetrate the polymer. Light-shielding agents include inorganic pigments such as carbon black and titanium oxide, and organic pigments such as phthalocyanine blue and phthalocyanine green;
- UV absorber: can effectively absorb ultraviolet light with a wavelength of 290-410 nm, but rarely absorbs visible light. It has good thermal stability and light stability. Classes of compounds suitable as UV absorbers include o-hydroxybenzophenones, benzotriazoles, salicylates, triazines, and substituted acrylonitriles;
- quencher: can accept the energy absorbed by the chromophore in the plastic and radiate the energy in the form of heat, fluorescence or phosphorescence, thus protecting the polymer from UV damage. It has a good stabilizing effect on polymers and is mainly used in films and fibers. Mainly, these are organic chelates of divalent nickel;
- free radical trapping agent: this type of light stabilizer can trap the active free radicals generated in the polymer, thus inhibiting the photooxidation process and achieving the purpose of light stabilization. The most used currently are the so-called Hindered Amine Light Stabilizers (HALS);
- hydroperoxide decomposer or secondary antioxidant: they are essentially sulfur compounds. Their function is to decompose the hydroperoxides, which are responsible for branching, in a non-radical way. Any free radicals are immediately captured, thus inhibiting the degradation of the polymer.

In particular, hindered amine light stabilizers (HALS) are chemical compounds containing an amine functional group. These compounds are typically derivatives of tetramethylpiperidine and, as mentioned, are mainly used to protect polymers from the effects of photooxidation. They are also increasingly used as thermal stabilizers, particularly for low and moderate heat levels, however during high temperature processing of polymers (e.g. injection molding) they remain less effective than traditional phenolic antioxidants.

HALS do not absorb UV radiation, but act to inhibit polymer degradation by continuously and cyclically removing free radicals that are produced by photooxidation of the polymer itself. In general, HALS react with the peroxy radicals of the initial polymer (ROO•) and the radicals of the alkyl polymer (R•) formed by the reaction of the polymer and oxygen, preventing further oxidation of the radicals. Through these reactions, HALS are oxidized to their corresponding aminoxy radicals, however they are able to return to their initial amine form via a series of additional radical reactions. The high efficiency and longevity of HALS are due to this cyclical process in which HALS are regenerated rather than consumed during the stabilization process.

The main problems associated with this type of stabilizers are their compatibility with high molecular weight polymer chains and low molecular weight migration, in addition to the environmental, health and safety risks related to their high toxicity.

In general, there is thus a felt need to identify light stabilizers that can offer adequate performance in polymeric materials, especially in very thin films, while at the same time being able to improve the environmental and production impact conditions.

It is therefore the aim of the present invention to provide an alternative component to these HALS, which can guarantee similar performances, showing improved overall sustainability, so as to overcome the problems and limitations of the prior art.

### SUMMARY OF THE INVENTION

This object was achieved through the use of UV196, as defined in the attached claims. The present invention also concerns a film of polymeric material comprising UV196 as a light stabilizer.

### DETAILED DESCRIPTION OF THE INVENTION

Therefore, the invention concerns the use of UV196 as a light stabilizer in polymeric materials.

"UV196" denotes the following cyclic polymer (EC n. 401-300-8 and CAS n. 86168-95-8) having formula 2,9,11,13,15,22,24,26,27,28-Decaazatricyclo[21.3.1.110,14] octacosa-1(27),10,12,14(28),23,25-hexaene-12,25-diamine, N12,N25-bis(1,1,3,3-tetra- methylbutyl)-2,9,15,22-tetrakis(2,2,6,6-tetramethyl-4-piperidinyl)-

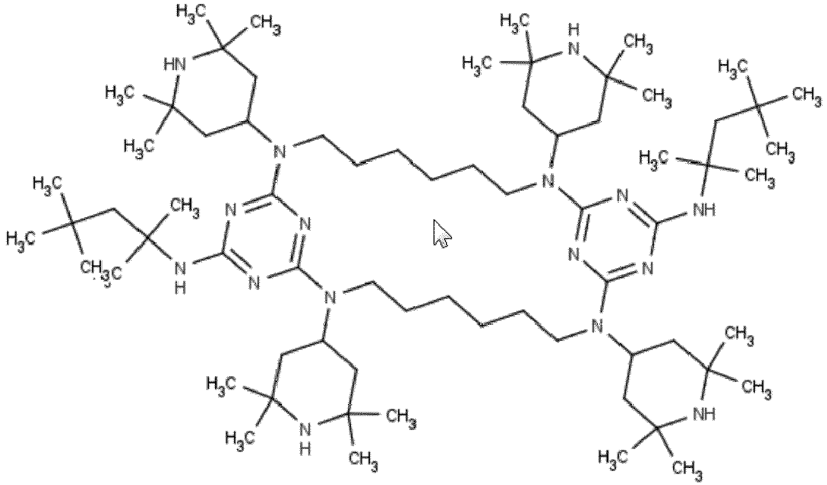

It has in fact been surprisingly observed that UV196, despite having so far only been used as a UV absorber, is instead also capable of stabilizing polymeric materials exposed to visible light, in particular exposed to sunlight which includes radiation both in the UV spectrum and in the visible spectrum.

This is particularly advantageous as it is now possible to replace traditional HALS with a compound that is not only convenient from a cost point of view (UV196 costs approximately 50% less than a HALS, in terms of production, separation, crystallization and drying), but also from the point of view of sustainability, since UV196 is a by-product of the production of HALS, in particular of HALS 944 (CAS n. 70624-18-9), which is currently the most used.

Furthermore, UV196 is not volatile, and shows a decidedly low rate of migration out of the polymer mass, thus maintaining high efficacy.

Finally, UV196 is not classified as a dangerous compound in the REACH SVHC (Substances of Very High Concern) list.

Therefore, the use of UV196 as a light stabilizer allows to reduce costs, but also improve the overall environmental impact of the production of polymeric materials, especially in film form.

In fact, the present invention preferably concerns the use of UV196 as a light stabilizer in polymeric materials in film form.

More preferably, such polymeric materials in film form have a thickness of less than 500 microns.

In preferred embodiments, such polymeric materials in film form have a thickness of 40-200 microns.

Preferably, UV196 is used in a concentration of 0.01-1% by weight, based on the weight of the polymeric material.

More preferably, UV196 is used in a concentration of 0.10-0.50% by weight, based on the weight of the polymeric material.

Said polymeric material is preferably a polyolefin, more preferably polyethylene, polypropylene or a combination thereof. In preferred embodiments, said polymeric material is LDPE (low density polyethylene).

The present invention also concerns a film of polymeric material comprising UV196 as a light stabilizer.

Preferably, said films have a thickness of less than 500 microns.

More preferably, said film has a thickness of 40-200 microns.

Preferably, said film comprises UV196 in a concentration of 0.01-1% by weight, based on the weight of the film.

More preferably, said film comprises UV196 in a concentration of 0.10-0.50% by weight, based on the weight of the film.

In some embodiments, the film further comprises a further light stabilizer selected from HALS, i.e. from compounds typically represented by 2,2,6,6 tetraalkyl piperidines.

HALS compounds particularly suitable are: HALS 944 (CAS n. 70624-18-9), HALS 622 (CAS n. 65447-77-0), UVA BZP 81 (CAS n. 1843-05-6), UVA BZT 326 (CAS n. 3846-71-7), UVA Triazine 1164 (CAS n. 2725-22-6), UVA 2908 (CAS n. 67845-93-6), UVA 3030 (CAS n. 178671-58-4), UVA 360 (CAS n. 103597-45-1), UVA Triazine 1557 (CAS n. 147315-50-2), UVA 2908 (CAS n. 67845-93-6), HALS 770 (CAS n. 52829-07-9), HALS 3853 (CAS n. 167078-06-0), HALS N30 (CAS n. 202483-55-4), HALS HA88 (CAS n. 136504-96-6), HALS 3346 (CAS n. 82451-48-7), HALS LA 57 (CAS n. 64022-61-3), HALS LA 63 (CAS n. 101357-36-2), HALS 119 (CAS n. 106990-43-6), HALS 3529 (CAS n. 193098-40-7), HALS LA 52 (CAS n. 101544-98-3), HALS NOR 371 (CAS n. 247243-62-5), HALS NOW (CAS n. 942926-88-7), HALS LA-81 (705257-84-7), HALS 123 (CAS n. 129757-67-1), or a mixture thereof.

Preferably, said further light stabilizer is selected from HALS 944 (CAS n. 70624-18-9), HALS 622 (CAS n. 65447-77-0), UVABZP 81 (CAS n. 1843-05-6), UVABZT 326 (CAS n. 3846-71-7), UVA 1164 (CAS n. 2725-22-6), UVA 2908 (CAS n. 67845-93-6), or a mixture thereof.

In preferred embodiments, in the films of the invention, UV196 and said further light stabilizer are in a weight ratio of 3:1 to 1:3, preferably about 1:1.

The film comprising UV196 can be produced according to methods known in the art, preferably by extrusion.

Actually, a widespread method for producing polyolefin films and polyolefin tapes consists in extruding the polymer melt through a suitable apparatus and, in the form of a film, into a waterbath, where the film is cooled and solidified. This film is then turn passed out of the waterbath and subjected to further steps of processing. On emerging from the waterbath the film can entrain water, which interferes with subsequent steps of processing. This effect, the entrainment of water from the waterbath, is often termed "water carry-over" in the technical literature, and this can be abbreviated to WCO. WCO is measured as the height, preferably expressed in "cm", at a set speed of the film coming out of the extruder.

Stretching of the film at a suitable temperature results in orientation and further crystallization of the polymer, resulting in the specific properties. This second step of processing may take place directly on the film, but the primary film is often split into tapes prior to the stretching process.

Since the desired properties are obtained during the stretching process, precise adherence to all process parameters is essential here. Even traces of moisture on the film or on the tapes prior to the stretching process alter the subsequent stretching and orientation so as to produce very severe variations in the quality of the product obtained. The effects of this go beyond merely the corresponding major variations in the quality of the resultant final product. Even during production or processing, the poor quality can cause break-offs of the tapes, for example, and thus stop production.

A source of water which can lead to the problems mentioned is the cooling bath into which the primary film is extruded. Although most plastics, in particular the polyolefins, such as polyethylene (PE) or polypropylene (PP) are very hydrophobic and therefore have little tendency to absorb water, it is frequently found that at relatively high production speeds water droplets or a thin film of water adhere to the film when this is drawn over the waterbath. In addition, various additives have to be added to the polymer to ensure that the final product has good functionality. Some of these additives contribute to increased entrainment of water from the waterbath.

The additives, and also a maximum processing speed, are essential if suitable products are to be produced at low cost. A reduction in processing speed leads to uneconomic production. The addition of necessary additives, some of which lead to a worsening of WCO (i.e. more WCO and therefore poorer product) is also impossible to avoid, because otherwise the product properties brought about by the additives cannot be achieved. The reduction of WCO is currently promoted via simple design measures during machinery manufacture. For example, the draw-off of the film from the waterbath is usually vertically upward, so that gravity alone maximizes the amount of water dropping away. In addition, use is often made of squeeze rollers and/or air knives to remove the maximum amount of water from the film. Besides purely design-related methods, there are also other methods for improving WCO, such as using additives. Ideally, no undesirable side-effects should arise, and the process should also be capable of problem-free use for existing formulations.

Surprisingly, the present invention has allowed this purpose to be achieved both in the embodiments that include UV196, and in the embodiments that further include another light stabilizer selected from HALS. It has in fact been observed that this parameter can be drastically improved, even by 5 times, compared to the values detected for the comparison films including HALS only.

Preferably, when the film exit speed from the extruder is set at 50 m/min, the WCO of the film of the invention is 3-10 cm.

More preferably, when the film exit speed from the extruder is set at 50 m/min, the WCO of the film of the invention is 3-5 cm, when the film comprises only UV196, while it is 6-9 cm, when the film further includes also a HALS.

This means that it has been achieved the object of providing an alternative component to such HALS, which offers similar performances, showing improved overall sustainability (in terms of for example WCO), so as to overcome the problems and limitations of the prior art, such as expressed above.

It is to be understood that all possible combinations of the preferred aspects of the use of UV196 and the film that includes it are also described, and therefore similarly preferred, as indicated above.

It is also to be understood that all aspects identified as preferred and advantageous for the use of UV196 are to be considered similarly preferred and advantageous also for the preparation and use of the film which includes it.

Illustrative and non-limiting examples are provided below to support the invention.

### EXAMPLES

### Example 1.

LDPE films with a thickness of 100 microns were produced by using the TP45 extrusion line (mini film blowing machine) of Ruian Tplast Machine Co, Ltd (TW).

The LDPE used is SABIC^{®}'s commercial LDPE HP0321NN product (food grade material) with an MFR (Melt Mass-Flow Rate) of 0.25 (190°C, 2.1 kg).

The LDPE starting material was extruded into several films, adding stabilizers as follows:

| | composition | CAS n. |
|---|---|---|
| 1 | LDPE only | |
| 2 | LDPE + 0.2% HALS 944 | HALS 944: 70624-18-9 |
| 3 | LDPE + 0.2% UV196 | |
| 4 | LDPE + 0.2% (UV196 + HALS 622) (1:1) | HALS 622: 65447-77-0 |
| 5 | LDPE + 0.2% (UV196 + HALS 944) (1:1) | |
| 6 | LDPE + 0.2% (UV196 + UVABZP 81) (1:1) | UVA BZP 81: 1843-05-6 |
| 7 | LDPE + 0.2% (UV196 + UVABZT 326) (1:1) | UVA BZT 326: 3846-71-7 |
| 8 | LDPE + 0.2% (UV196 + UVA 1164) (1:1) | UVA 1164: 2725-22-6 |
| 9 | LDPE + 0.2% (UV196 + UVA 2908) (1:1) | UVA 2908: 67845-93-6 |

In particular, the films having the compositions shown in the table above were produced by using a laboratory twin-screw extruder at a temperature of 230°C from a TP45 extrusion line with the following characteristics: Lab 20 model; diameter 22mm; LID 32 with a flow rate of 5 kg/hour.

The resulting films were cut into A4 sheets and their light stability was tested by exposure in a SEVAR Bandol Wheel^{®} 400 H (at the following settings: exposure to humidity 18%; 6 cycles/day; temperature: 60°C) following the so-called "*carbonyl index*" at 1712 cm⁻¹ in spectroscopy FTIR (instrument JASCO V-730).

The results of that test are shown below:

| | *Carbonyl index* | Notes: |
|---|---|---|
| | at 1712 cm⁻¹ after 2000 hours | |
| 1 | >2 | Completely embrittled film |
| 2 | 0,20 | Film with satisfactory characteristics |
| 3 | 0.25 | Film with satisfactory characteristics |
| 4 | 0.15 | Film with satisfactory characteristics |
| 5 | 0.20 | Film with satisfactory characteristics |
| 6 | 0.25 | Film with satisfactory characteristics |
| 7 | 0.20 | Film with satisfactory characteristics |
| 8 | 0.15 | Film with satisfactory characteristics |
| 9 | 0.12 | Film with satisfactory characteristics |

The above reported *carbonyl index* is calculated as the peak absorbance value at 1712 cm⁻¹ minus the absorbance value at 1815 cm⁻¹ (*baseline* correction).

As can be seen from the table, with the use of UV196 alone, the light stability obtained measured by the increase in the *carbonyl index* is substantially the same as that of HALS 944 alone, which is the market standard.

The combinations with other HALS in a 1:1 ratio with UV196, at the same concentration in the film, do not significantly differ from this data, confirming the fact that UV196 behaves in a completely equivalent way to a HALS in terms of stability to light.

### Example 2.

It was assessed the parameter WCO (*Water Carry-Over*) characterizing the extrusion of film or tapes.

The production line used was composed of: feeding system, an extruder, a water bath for cooling the tape with a vertical dispenser in air and a downstream section for stretching, fixing, winding and cutting the tape.

The feeding system conveys the polymer and masterbatch pellets to the extruder hopper via a pneumatic conveyor and a loss-and-weight dosing system.

The extruder was single screw with a length of 25-30 diameters and a diameter of 60 to 150 mm depending on the size/production required (usually from 60 to 500 kg/h) and a filter section before the head clean the spindle, usually the filter is 100 mesh, the extruder temperatures range from 70°C (zone 1) to 200°C (HDPE/LL) or 230° (PP) at the head, the screw revolutions are usually from 100 to 400 revolutions/min depending on the desired power.

The film exiting the extruder head is cooled in a water bath at a temperature of 30-50°C with a final vertical stretch in air to dry the water on the belt by gravity and is equipped with a vertical speed meter to regulate the speed of the tape.

In the final vertical stretch in the air, the effect of water carry-over can appear which forces the speed (exit) of the film to be reduced by acting on the measurement of the vertical speed.

A final section then involves the finishing phase of the film with stretching, fixing, winding and cutting systems.

The WCO measurement is carried out in the vertical section, before stretching and fixing.

### Set parameters:

- extrusion temperature 240°C
- water bath temperature: room temp. (23°C)
- film exit speed: 50 m/min

### Results:

| | composition | CAS n. | WCO (cm) |
|---|---|---|---|
| 1 | LDPE + 0.2% HALS 770 | HALS 770: 52829-07-9 | 20 |
| 2 | LDPE + 0.2% HALS 944 | HALS 944: 70624-18-9 | 17 |
| 3 | LDPE + 0.2% UV196 | | 4 |
| 4 | LDPE + 0.2% (UV196 + HALS 770) (1:1) | | 8 |
| 5 | LDPE + 0.2% (UV196 + HALS 944) (1:1) | | 7 |

What is clear from the table above is that the presence of UV196 also improves by 5 times the WCO values observed with HALS 770 and 944.

Furthermore, even when UV196 is present with the same HALS in a 1:1 ratio, anyway significantly improved results are achieved.

## Claims

1. Use of UV196 (CAS n. 86168-95-8) having formula 2,9,11,13,15,22,24,26,27,28-decaazatricyclo[21.3.1.110,14] octacosa-1 (27),10,12,14(28),23,25-hexaene-12,25-diamine, N12,N25-bis(1,1,3,3-tetramethylbutyl)-2,9,15,22-tetrakis(2,2,6,6-tetramethyl-4-piperidinyl)-, as a light stabilizer in polymeric materials.

2. The use of UV196 of claim 1, in polymeric materials in the form of film.

3. The use of UV196 of claim 2, wherein said polymeric materials in the form of film have a thickness of less than 500 microns, preferably have a thickness of 40-200 microns.

4. The use of UV196 of any one of claims 1-3, wherein UV196 is in a concentration of 0.01-1 wt%, based on the weight of the polymeric material.

5. The use of UV196 of claim 4, wherein UV196 is in a concentration of 0.10-0.50 wt%, based on the weight of the polymeric material.

6. The use of UV196 of any one of claims 1-5, wherein said polymeric material is a polyolefin, preferably polyethylene, polypropylene or a combination thereof.

7. Film of polymeric material comprising UV196 as a light stabilizer.

8. The film of claim 7, having a thickness of less than 500 microns, preferably 40-200 microns.

9. The film of claim 7 or 8, comprising UV196 in a concentration of 0.01-1 wt%, based on the weight of the film, preferably 0.10-0.50 wt%.

10. The film of any one of claims 7-9, further comprising another light stabilizer selected from 2,2,6,6 tetraalkyl piperidines, such as preferably HALS 944 (CAS n. 70624-18-9), HALS 622 (CAS n. 65447-77-0), UVABZP 81 (CAS n. 1843-05-6), UVABZT 326 (CAS n. 3846-71-7), UVA 1164 (CAS n. 2725-22-6), UVA 2908 (CAS n. 67845-93-6) or a mixture thereof.
